(19) Europäisches Patentamt
European Patent Office
Office européen des brevets

(11) EP 4 708 377 A1

(12) **EUROPEAN PATENT APPLICATION**

(43) Date of publication:
**11.03.2026 Bulletin 2026/11**

(21) Application number: **25195341.0**

(22) Date of filing: **12.08.2025**

(51) International Patent Classification (IPC):
**H01M 4/131** (2010.01)   **H01M 4/36** (2006.01)
**H01M 4/62** (2006.01)   **H01M 10/0525** (2010.01)
**H01M 10/0562** (2010.01)   **H01M 4/02** (2006.01)

(52) Cooperative Patent Classification (CPC):
**H01M 10/0562; H01M 4/131; H01M 4/366;**
**H01M 4/62; H01M 10/0525;** H01M 2004/021;
H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **19.08.2024 KR 20240110674**

(71) Applicant: **SAMSUNG SDI CO., LTD.**
**Yongin-si, Gyeonggi-do 17084 (KR)**

(72) Inventors:
• **Lee, Won Gi**
  **Yongin-si, Gyeonggi-do 17084 (KR)**
• **Choi, Jinkyu**
  **Yongin-si, Gyeonggi-do 17084 (KR)**

(74) Representative: **Michalski Hüttermann & Partner**
**Patentanwälte mbB**
**Kaistraße 16A**
**40221 Düsseldorf (DE)**

(54) **POSITIVE ELECTRODE FOR ALL-SOLID-STATE BATTERY, ALL-SOLID-STATE BATTERY INCLUDING THE SAME, AND METHOD OF MANUFACTURING THE SAME**

(57)    Disclosed are positive electrodes and all-solid-state batteries including the positive electrodes. A positive electrode includes a positive electrode current collector, a positive electrode active material layer on the positive electrode current collector, and a porous film in the positive electrode active material layer. The positive electrode active material layer includes positive electrode active material particles and solid electrolyte particles. The positive electrode active material layer has a first section and a second section that are distinct across the porous film. The first section is between the positive electrode current collector and the porous film. An average particle diameter of the solid electrolyte particles in the first section is different from an average particle diameter of the solid electrolyte particles in the second section.

FIG. 7

EP 4 708 377 A1

# EP 4 708 377 A1

**Description**

This application claims priority to Korean Patent Application No. 10-2024-0110674 filed on August 19, 2024 in the Korean Intellectual Property Office.

BACKGROUND

The present disclosure relates to a positive electrode for an all-solid-state battery, an all-solid-state battery including the positive electrode, and a method of manufacturing the same.

With increasing use of battery-using electronic devices, such as, e.g., mobile phones, laptop computers, electric vehicles, and the like, there is increasing demand for rechargeable batteries with high energy density and high capacity. Therefore, improving performance of rechargeable lithium batteries may be advantageous.

All-solid-state batteries are batteries in which liquid electrolytes are replaced with solid electrolytes. As all-solid-state batteries do not use flammable organic dispersion mediums, the possibility of fire or explosion may be significantly reduced even in the event of short-circuits. Therefore, compared to lithium ion batteries that use liquid electrolytes, all solid-state batteries may have greatly increased safety.

SUMMARY

An example embodiment of the present disclosure includes a positive electrode with large capacity within limited volume, desired or improved ion conductivity, and high current density for an all-solid-state battery.

An example embodiment of the present disclosure includes an all-solid-state battery with large capacity, uniform thickness and quality, increased cycle-life, and high efficiency.

An example embodiment of the present disclosure includes a method of manufacturing a positive electrode for an all-solid-state battery, the method is possible to produce and is suitable for mass production.

According to an example embodiment of the present disclosure, a positive electrode for an all-solid-state battery may include a positive electrode current collector; a positive electrode active material layer on the positive electrode current collector; and a porous film in the positive electrode active material layer. The positive electrode active material layer may include positive electrode active material particles and solid electrolyte particles. The positive electrode active material layer may have a first section and a second section that are distinct across the porous film. The first section may be between the positive electrode current collector and the porous film. An average particle diameter of the solid electrolyte particles in the first section may be different from an average particle diameter of the solid electrolyte particles in the second section.

According to an example embodiment of the present disclosure, an all-solid-state battery may include the positive electrode discussed above; a negative electrode opposite to the positive electrode; and a solid electrolyte layer between the positive electrode and the negative electrode.

According to an example embodiment of the present disclosure, a method of manufacturing a positive electrode for an all-solid-state battery may include preparing a first positive electrode slurry that includes a first solid electrolyte particle; preparing a second positive electrode slurry that includes a second solid electrolyte particle; coating on a positive electrode current collector the first positive electrode slurry to form a first preliminary active material layer; placing on the first preliminary active material layer a composite layer that comprises a porous film; and pressing the positive electrode current collector, the first preliminary active material layer, and the composite layer that are stacked, e.g., sequentially stacked, together. The step of forming the composite layer may include providing a preliminary porous film; and coating on the preliminary porous film the second positive electrode slurry to form the composite layer. An average particle diameter of the first solid electrolyte particle may be different from an average particle diameter of the second solid electrolyte particle.

BRIEF DESCRIPTION OF DRAWINGS

FIG. 1 illustrates a cross-sectional view showing an all-solid-state battery, according to an example embodiment of the present disclosure.

FIG. 2 illustrates a cross-sectional view showing an all-solid-state battery, according to an example embodiment of the present disclosure.

FIG. 3 illustrates a plan view showing an all-solid-state battery, according to an example embodiment of the present disclosure.

FIG. 4 illustrates a cross-sectional view showing an all-solid-state battery, according to an example embodiment of the present disclosure.

FIG. 5 illustrates a cross-sectional view showing an all-solid-state battery, according to an example embodiment of the present disclosure.

FIG. 6 illustrates a cross-sectional view showing an all-solid-state battery including a gasket structure, according to an example embodiment of the present disclosure.

FIG. 7 illustrates a cross-sectional view showing an all-solid-state battery, according to an example embodiment of the present disclosure.

FIG. 8 illustrates a subdivided cross-sectional view showing a positive electrode for an all-solid-state battery of FIG. 7, according to an example embodiment of the present disclosure.

FIGS. 9 and 10 illustrate cross-sectional views showing a positive electrode for an all-solid-state battery, according to an example embodiment for explaining a position of a porous film disposed in a positive electrode active material.

FIG. 11 illustrates a cross-sectional view showing a positive electrode for an all-solid-state battery, according to an example embodiment of the present disclosure.

FIGS. 12A and 12B illustrate cross-sectional views showing a method of forming a composite layer, according to an example embodiment of the present disclosure.

FIGS. 13 to 15 illustrate cross-sectional views showing a method of fabricating an all-solid-state battery, according to an example embodiment of the present disclosure.

FIG. 16 illustrates a graph showing a Nyquist plot based on impedance measurement results of positive electrodes, according to some example embodiments and comparative examples.

FIG. 17 is a flow chart illustrating a method manufacturing a positive electrode for an all-solid-state battery, according to various example embodiments.

## DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this disclosure, it is understood that, when an element is referred to as being "on" another element, the element can be "directly on" the other element, or intervening elements may be present between therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated in the drawings have general properties, and shapes of regions illustrated in the drawings are used to disclose specific shapes but are not limited to the scope of the present disclosure. It is understood that, although the terms "first", "second", "third", and the like, may be used herein to describe various elements, these elements should not be limited by these terms. These terms are only used to distinguish one element from another element. Some example embodiments explained and illustrated herein include complementary embodiments thereof.

The terminology used herein is for the purpose of describing particular example embodiments only and is not intended to limit the present disclosure. As used herein, the singular forms are intended to include the plural forms as well. The terms 'comprises/includes' and/or 'comprising/including' used in the specification do not exclude the presence or addition of one or more other components.

In this disclosure, the term "combination thereof" may refer to a mixture, a stack, a composite, a copolymer, an alloy, a blend, or a reaction product.

Unless otherwise especially defined in this disclosure, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

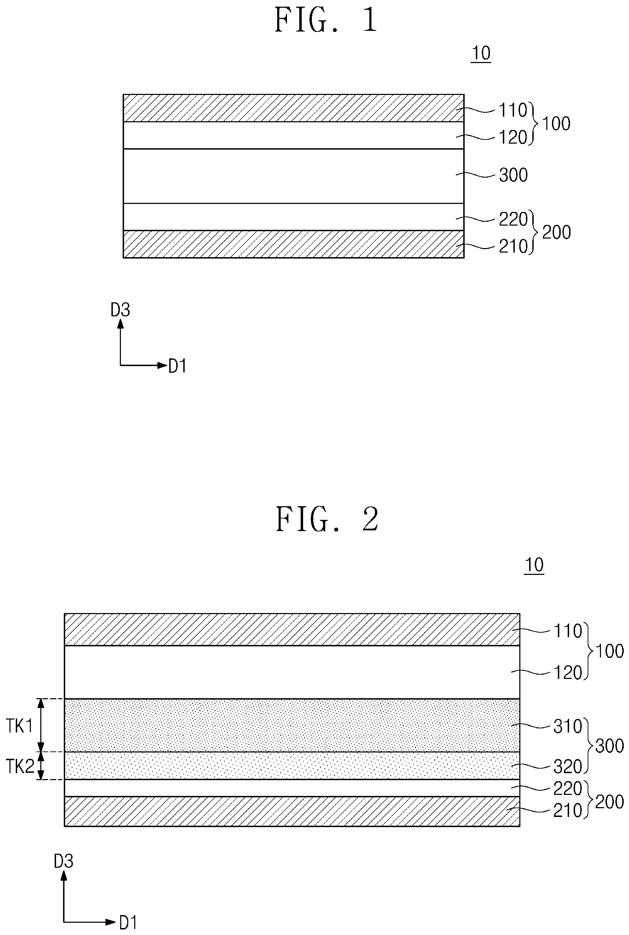

FIG. 1 is a cross-sectional view illustrating an all-solid-state battery 10, according to an example embodiment of the present disclosure.

Referring to FIG. 1, the all-solid-state battery 10 may include a positive electrode 100, a negative electrode 200 opposite to the positive electrode 100, and a solid electrolyte layer 300 between the positive electrode 100 and the negative electrode 200. The present disclosure, however, is not limited thereto, and the all-solid-state battery 10 may further include an additional functional layer, such as, e.g., an adhesion enhancement layer, between the positive electrode 100 and the solid electrolyte layer 300, or between the negative electrode 200 and the solid electrolyte layer 300.

The positive electrode 100 may include a positive electrode current collector 110, and a positive electrode active material layer 120 on the positive electrode current collector 110. The positive electrode active material layer 120 may include a positive electrode active material, a solid electrolyte, a conductive material, and a binder.

The positive electrode current collector 110 may provide a reference surface on which the positive electrode active material layer 120 is disposed. The positive electrode current collector 110 may have a plate or foil shape. For example, the positive electrode current collector 110 may include at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from that shown in FIG. 1, in an example embodiment of the present disclosure, the positive electrode current collector 110 may be omitted. Although not shown, to increase adhesion between the positive electrode current collector 110 and the positive electrode active material layer 120, a carbon layer having a thickness in a range of about 0.1 $\mu$m to about 4 $\mu$m may further be disposed between the positive electrode current collector 110 and the positive electrode active material layer 120.

The positive electrode active material may include a material that can reversibly absorb and desorb lithium ions. For example, the positive electrode active material may include at least one of lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be included alone or in a mixture of two or more substances.

The lithium transition metal oxide may be or include, for example, a compound represented by at least one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0<\alpha<2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_{1-b-c}Mn_bB_cD_\alpha$ (where $0.90 \leq a \leq 1$, $0 \leq b \leq 0.5$, $0 \leq c \leq 0.05$, and $0< \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where $0<x<1, 0<y<1$, $0<z<1$, and $x+y+z=1$). When the positive electrode active material includes a ternary lithium transition metal oxide having the layered rock salt type structure, the all-solid-state battery 10 may improve in energy density and thermal stability.

The compound included in the positive electrode active material may be covered with a coating layer (not shown). The positive electrode active material may be used in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be or include amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O-ZrO_2$ (LZO). A method for forming the coating layer may be any of methods that do not adversely affect physical characteristics of the positive electrode active material. The method of forming the coating layer may include, for example, spray coating or immersion.

When the positive electrode active material includes nickel (Ni) as a ternary lithium transition metal oxide such as NCA or NCM, a capacity density of the all-solid-state battery 10 may increase to reduce metal elution from the positive electrode active material in a charged state. Thus, the all-solid-state battery 10 may improve in cycle characteristics in a charged state. The expression "cycle characteristics" may refer to properties that indicate the degree to which the all-solid-state battery 10 is degraded due to charge and discharge. For example, the all-solid-state battery 10 with high cycle characteristics may degrade less due to charge and discharge, while the all-solid-state battery 10 with low cycle characteristics may degrade more due to charge and discharge.

The positive electrode active material may have, for example, a substantially spherical or substantially oval particle shape. There is no limitation on a particle diameter and an amount of the positive electrode active material.

The solid electrolyte may include a sulfide-based solid electrolyte with desired or improved lithium ion conductivity. The sulfide-based solid electrolyte may include, for example, at least one of $Li_2S-P_2S_5$, $Li_2S-P_2S_5-LiX$ (where X is or includes a halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are each a positive integer, and "Z" is or includes one of Ge, Zn, and Ga), $Li_2S-GeS_2$, $Li_2S-SiS_2-Li_3PO_4$, $Li_2S-SiS_2-Li_pMO_q$ (where p and q are each a positive integer, and "M" is or includes one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$. The argyrodite-type solid electrolyte may have a density in a range of about 1.5 g/cc to about 2.0 g/cc. As the argyrodite-type solid electrolyte has a density that is equal to or greater than about 1.5 g/cc, it may be possible to decrease an internal resistance of an all-solid-state battery and to hinder or prevent a solid electrolyte layer from short-circuit and penetration caused by the formation of lithium dendrite. The solid electrolyte may have an elastic modulus in a range of, for example, about 15 GPa to about 35 GPa.

The solid electrolyte included in the positive electrode active material layer 120 may have a medium-sized average particle diameter ($D_{50}$) that is less than the average particle diameter of a solid electrolyte included in the solid electrolyte layer 300. For example, the medium-sized average particle diameter ($D_{50}$) of the solid electrolyte in the positive electrode active material layer 120 may be about equal to or less than about 90%, equal to or less than about 80%, equal to or less than about 70%, equal to or less than about 60%, equal to or less than about 50%, equal to or less than about 40%, equal to or less than about 30%, or equal to or less than about 20% of the medium-sized average particle diameter ($D_{50}$) of a solid electrolyte included in the solid electrolyte layer 300. The medium-sized average particle diameter ($D_{50}$) may be a median diameter measured by a laser particle size distribution analyzer.

The positive electrode active material layer 120 may include a conductive material. The conductive material may have conductivity without causing chemical change of the all-solid-state battery 10 to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may include a material that adheres together the positive electrode active material, the solid electrolyte, and the conductive material included in the positive electrode active material layer 120, and that improves adhesion between the positive electrode active material layer 120 and the positive electrode current collector 110. The binder may include, for example, at least one of polyvinylidenefluoride, styrene-butadiene rubber (SBR), polytetrafluoroethylene, vinylidenefluoride/hexafluoropropylene copolymers, polyacrylonitrile, or polymethyl methacrylate.

In the positive electrode active material layer 120, the positive electrode active material may be included in an amount in a range of about 85 parts by weight to about 92 parts by weight relative to 100 parts by weight of a sum of the positive electrode active material, the solid electrolyte, the conductive material, and the binder. The binder may be included in an amount in a range of about 0.5 parts by weight to about 1.5 parts by weight in the positive electrode active material layer 120.

In the positive electrode active material layer 120, the conductive material may be present in an amount in a range of about 1 part by weight to about 50 parts by weight relative to 100 parts by weight of the solid electrolyte. When the conductive material is present in an amount that is less than about 1 part by weight relative to 100 parts by weight of the solid electrolyte, the positive electrode active material layer 120 may decrease in electrical conductivity. When the conductive material is present in an amount that is greater than about 50 parts by weight relative to 100 parts by weight of the solid electrolyte, a proportion of the conductive material may be substantially increased to cause incomplete formation of a coating layer that covers a surface of the solid electrolyte.

According to some example embodiments, the positive electrode active material layer 120 may further include at least one additive such as or including at least one of a filler, a coating agent, a dispersant, and an ion conductivity agent, in addition to the positive electrode active material, the solid electrolyte, the conductive material, and the binder.

The solid electrolyte layer 300 may be located between the positive electrode 100 and the negative electrode 200, and may include a sulfide-based solid electrolyte with desired or improved lithium ion conductivity. The solid electrolyte included in the solid electrolyte layer 300 may include a material that is the same as, or different from, the materials included in the solid electrolyte of the positive electrode active material layer 120.

The solid electrolyte layer 300 may further include a binder. The binder included in the solid electrolyte layer 300 may include, for example, at least one of styrene-butadiene rubber (SBR), polytetrafluoroethylene, polyvinylidenefluoride, polyethylene, but the present disclosure is not limited thereto. The binder of the solid electrolyte layer 300 may be the same as or similar to the binder of the positive electrode active material layer 120, or the binder of a negative electrode coating layer 220 which are discussed below.

The negative electrode 200 may include a negative electrode current collector 210 and a negative electrode coating layer 220 on the negative electrode current collector 210. The negative electrode current collector 210 may provide a reference surface on which the negative electrode coating layer 220 is disposed. The negative electrode current collector 210 may include a material that does not react, or does not substantially react, with lithium, for example, a material that does not form an alloy or a compound with lithium. For example, the negative electrode current collector 210 may include at least one of copper (Cu), stainless steel, titanium (Ti), iron (Fe), cobalt (Co), and nickel (Ni). A thickness of the negative electrode active current collector 210 may range from about 1 μm to about 20 μm, for example, from about 5 μm to about 15 μm or from about 7 μm to about 10 μm.

The negative electrode current collector 210 may be formed of or include one of the metals discussed above, an alloy of two or more of the metals discussed above, or a coating material. The negative electrode current collector 210 may have, for example, a plate or foil shape. In an example embodiment, the negative electrode current collector 210 may be omitted.

The negative electrode coating layer 220 may induce growth of lithium metal between the negative electrode coating layer 220 and the negative electrode current collector 210 when the all-solid-state battery 10 is charged The negative electrode coating layer 220 may be configured as a protection layer for lithium metal and simultaneously may reduce or suppress precipitation and growth of lithium dendrite.

The negative electrode coating layer 220 may include metal and carbon. For example, the negative electrode coating layer 220 may include at least one of gold (Au), platinum (Pt), palladium (Pd), silicon (Si), silver (Ag), aluminum (Al), bismuth (Bi), tin (Sn), and zinc (Zn). The negative electrode coating layer 220 may include at least one carbon-based material such as or including at least one of carbon black, acetylene black, furnace black, Ketjen black, and graphene. In an example embodiment, the negative electrode coating layer 220 may include a mixture of carbon black and silver (Ag).

The negative electrode coating layer 220 may further include an additive in addition to metal and carbon. The negative electrode coating layer 220 may include at least one additive such as or including, for example, at least one of a binder, a filler, a coating agent, a dispersant, and an ion conductivity agent.

The negative electrode coating layer 220 may have a thickness that is less than the thickness of the positive electrode active material layer 120. For example, the negative electrode coating layer 220 may have a thickness that is equal to or less than about 50%, equal to or less than about 40%, equal to or less than about 30%, equal to or less than about 20%, equal to or less than about 10%, or equal to or less than about 5% of the thickness of the positive electrode active material layer 120. The negative electrode coating layer 220 may have a thickness in a range of, for example, about 1 μm to about 20 μm, about 2 μm to about 10 μm, or about 3 μm to about 7 μm. When the negative electrode coating layer 220 has a substantially small thickness, lithium dendrite formed between the negative electrode coating layer 220 and the negative electrode current collector 210 may collapse the negative electrode coating layer 220 to reduce cycle characteristics of the all-solid-state battery 10. When the negative electrode coating layer 220 has a substantially large thickness, the all-solid-state battery 10 may have a decreased energy density and an increased internal resistance caused by the negative electrode coating layer 220, thereby reducing cycle characteristics of the all-solid-state battery 10.

Although not shown, a carbon layer may further be included to increase adhesion between the negative electrode coating layer 220 and the solid electrolyte layer 300.

FIG. 2 illustrates a cross-sectional view showing the all-solid-state battery 10, according to an example embodiment of the present disclosure

Referring to FIG. 2, the solid electrolyte layer 300 may include a positive electrode solid electrolyte layer 310 and a negative electrode solid electrolyte layer 320. The positive electrode solid electrolyte layer 310 may be adjacent to the positive electrode 100, and the negative electrode solid electrolyte layer 320 may be adjacent to the negative electrode 200. Each of the positive electrode solid electrolyte layer 310 and the negative electrode solid electrolyte layer 320 may include the solid electrolyte discussed above.

The positive electrode solid electrolyte layer 310 and the negative electrode solid electrolyte layer 320 may have different thicknesses from each other. The positive electrode solid electrolyte layer 310 may have a first thickness TK1, and the negative electrode solid electrolyte layer 320 may have a second thickness TK2. The first thickness TK1 may be greater than the second thickness TK2. For example, the first thickness TK1 may be in a range of about 10 times to about 100 times the second thickness TK2.

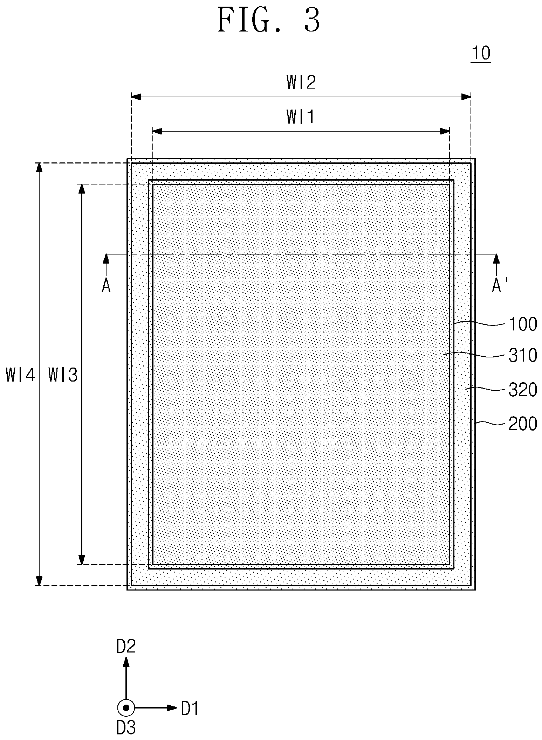

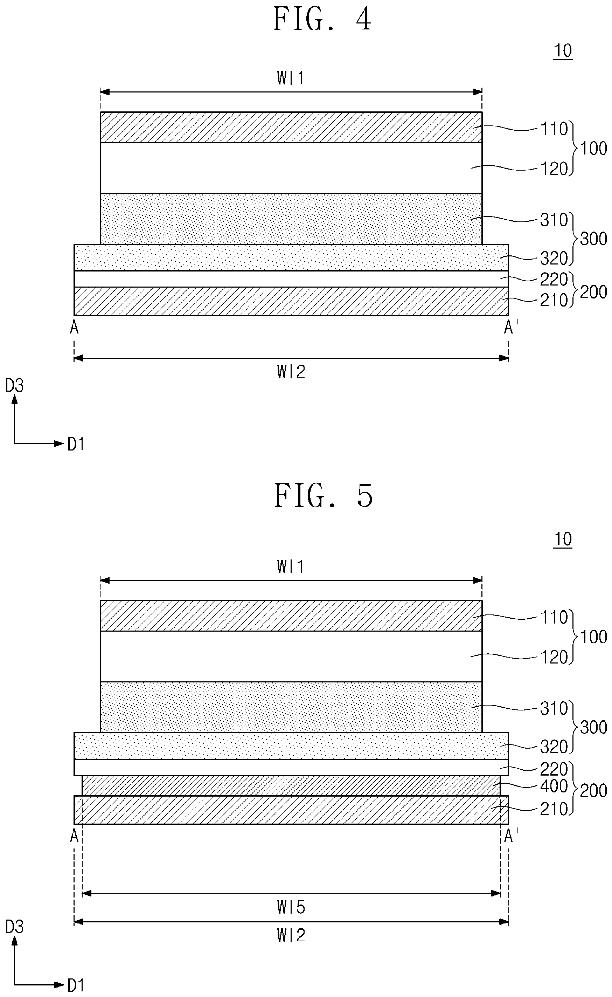

FIG. 3 illustrates a plan view showing the all-solid-state battery 10, according to an example embodiment of the present disclosure. FIG. 4 illustrates a cross-sectional view taken along line A-A' of FIG. 3. In the example embodiment that follows, a detailed description of technical features redundant to the technical features discussed above with reference to FIGS. 1 and 2 is omitted, and a difference thereof is discussed in detail.

Referring to FIGS. 3 and 4, an area of the positive electrode 100 and an area of the negative electrode 200 may be different from each other. For example, the area of the negative electrode 200 may be greater than the area of the positive electrode 100. The positive electrode 100 may substantially completely overlap the negative electrode 200.

In an example embodiment of the present disclosure, the positive electrode solid electrolyte layer 310 may have an area that is substantially the same as the area of the positive electrode 100. The negative electrode solid electrolyte layer 320 may have an area substantially the same as the area of the negative electrode 200.

The positive electrode solid electrolyte layer 310 may have a first width WI1 in a first direction D1. The negative electrode solid electrolyte layer 320 may have a second width WI2 in the first direction D1. The first width WI1 may be less than the second width WI2. The positive electrode solid electrolyte layer 310 may have a third width WI3 in a second direction D2. The negative electrode solid electrolyte layer 320 may have a fourth width WI4 in the second direction D2. The third width WI3 may be less than the fourth width WI4.

The all-solid-state battery 10 according to the present example embodiment may be fabricated by forming a first stack of the positive electrode 100 and the positive electrode solid electrolyte layer 310, forming a second stack of the negative electrode 200 and the negative electrode solid electrolyte layer 320, and then laminating the first stack and the second stack together.

FIG. 5 illustrates a cross-sectional view taken along line A-A' of FIG. 3, showing an all-solid-state battery according to an example embodiment of the present disclosure.

Referring to FIG. 5, the negative electrode 200 of the all-solid-state battery 10 may further include a lithium metal layer 400 between the negative electrode current collector 210 and the negative electrode coating layer 220. The lithium metal layer 400 may have an increased thickness when the all-solid-state battery 10 is charged. The negative electrode coating layer 220 may be configured as a protection layer for the lithium metal layer 400, and simultaneously or contemporaneously may reduce or suppress growth of lithium dendrite from the lithium metal layer 400.

The lithium metal layer 400 may be or include a thin metal layer including lithium or lithium alloy. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, and any suitable lithium alloys may be used. The lithium metal layer 400 may include lithium or one of the alloys mentioned above. Alternatively, the lithium metal layer 400 may include a number of types of alloy.

The lithium metal layer 400 may have a fifth width WI5 in the first direction D1. The fifth width WI5 may be the same as or greater than the first width WI1. The fifth width WI5 may be the same as or less than the second width WI2. For example, the fifth width WI5 may be greater than the first width WI1 and less than the second width WI2.

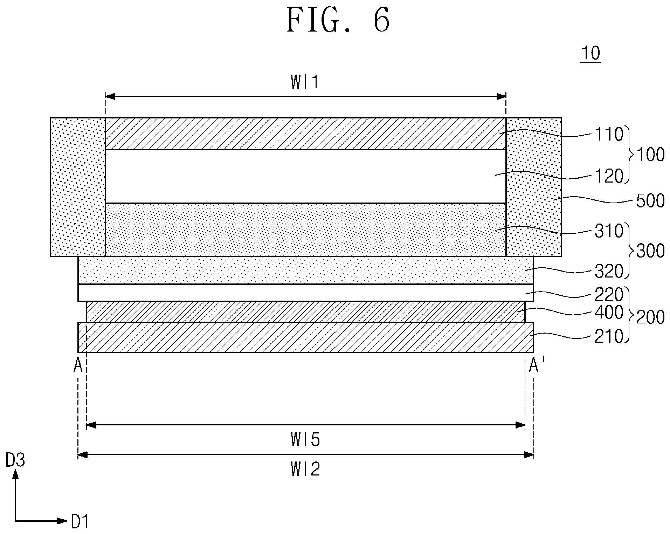

FIG. 6 illustrates a cross-sectional view showing an all-solid-state battery, according to an example embodiment of the present disclosure.

Referring to FIG. 6, the all-solid-state battery 10 may include a gasket structure 500. A difference in area between the first stack and the second stack discussed above may produce a step difference on a lateral surface of the all-solid-state battery 10, and the gasket structure 500 may substantially fill the step difference. The gasket structure 500 may surround lateral surfaces in the first and second directions D1 and D2 of the first stack of the all-solid-state battery 10. For example, a thickness of the gasket structure 500 may be substantially the same as the thickness of the first stack. Thus, even when the first stack and the second stack having different areas are stacked and pressed, the all-solid-state battery 10 may be substantially protected or substantially prevented from damage to the step difference on the lateral surface. The phrase "substantially the same thickness" may refer to a thickness that is enough to reduce or prevent damage to the step difference on the lateral surface of the all-solid-state battery 10 even when the first stack and the second stack having different areas are stacked and pressed.

The following description focuses on an all-solid-state battery and a positive electrode included in the all-solid-state battery, according to some example embodiments of the present disclosure. In the example embodiment that follows, a detailed description of technical features redundant to the technical features discussed above with reference to FIGS. 1 to 6 is omitted, and a difference thereof is explained in detail.

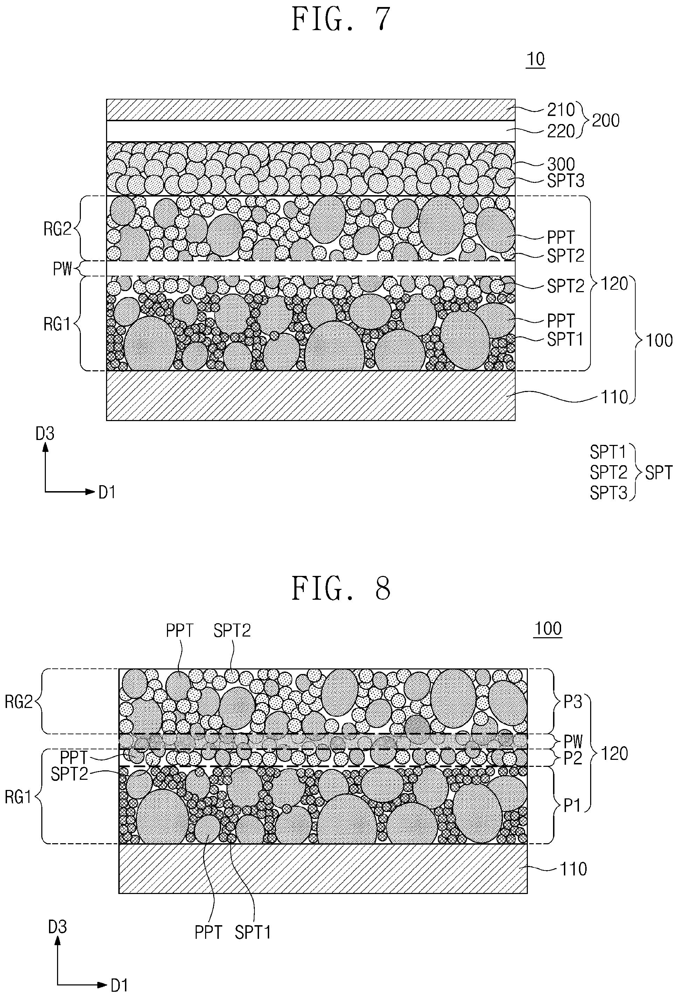

FIG. 7 illustrates a cross-sectional view showing an all-solid-state battery, according to an example embodiment of the present disclosure.

Referring to FIG. 7, an all-solid-state battery 10 may include a positive electrode 100, a solid electrolyte layer 300 on the positive electrode 100, and a negative electrode 200 on the solid electrolyte layer 300. The positive electrode 100 may include a positive electrode current collector 110, a positive electrode active material layer 120 on the positive electrode current collector 110, and a porous film PW in the positive electrode active material layer 120.

Referring still to FIG. 7, the positive electrode active material layer 120 may include a first section RG1 and a second section RG2. The first section RG1 and the second section RG2 may be distinct along the porous film PW. The first section RG1 may refer to an area between the positive electrode current collector 110 and the porous film PW. The second section RG2 may refer to an area oppositely spaced apart from the first section RG1 across the porous film PW. For example, the second section RG2 may refer to an area between the solid electrolyte layer 300 and the porous film PW.

The positive electrode active material layer 120 may include positive electrode active material particles PPT and solid electrolyte particles SPT. The solid electrolyte layer 300 may include solid electrolyte particles SPT. For example, the positive electrode active material layer 120 may include a first solid electrolyte particle SPT1 and a second solid electrolyte particle SPT2. The solid electrolyte layer 300 may include a third solid electrolyte particle SPT3. For example, the first section RG1 may include the first solid electrolyte particle SPT1 and the second solid electrolyte particle SPT2. The second section RG2 may include the second solid electrolyte particle SPT2.

The solid electrolyte particles SPT may include the solid electrolyte discussed with reference to FIG. 1. For example, the solid electrolyte particles SPT may include a sulfide-based solid electrolyte.

The first solid electrolyte particle SPT1 may be disposed on a portion of the first section RG1 that is adjacent to the positive electrode current collector 110, and the second solid electrolyte particle SPT2 may be disposed on a portion of the first section RG1 adjacent to the porous film PW.

In an example embodiment, an average particle diameter ($D_{50}$) of the solid electrolyte particles SPT in the solid electrolyte layer 300 may be greater than the average particle diameter of the solid electrolyte particles SPT in the positive electrode active material layer 120. For example, the average particle diameter ($D_{50}$) of the first solid electrolyte particle SPT1 may be less than the average particle diameter of the second solid electrolyte particle SPT2. The average particle diameter ($D_{50}$) of the second solid electrolyte particle SPT2 may be less than the average particle diameter of the third solid electrolyte particle SPT3.

In an example embodiment, an average particle diameter ($D_{50}$) of the positive electrode active material particle PPT may range from about 2 $\mu$m to about 20 $\mu$m, for example, from about 2 $\mu$m to about 10 $\mu$m, from about 5 $\mu$m to about 15 $\mu$m, or from about 10 $\mu$m to about 20 $\mu$m.

In an example embodiment, the average particle diameter ($D_{50}$) of the first solid electrolyte particle SPT1 may be equal to or less than about 1.5 $\mu$m, for example, about 0.2 $\mu$m to about 1.0 $\mu$m or about 0.5 $\mu$m to about 1.5 $\mu$m.

In an example embodiment, the average particle diameter ($D_{50}$) of the second solid electrolyte particle SPT2 may range from about 1.5 $\mu$m to about 2.5 $\mu$m, for example, from about 1.5 $\mu$m to about 2.0 $\mu$m or from about 2.0 $\mu$m to about 2.5 $\mu$m.

In an example embodiment, the average particle diameter ($D_{50}$) of the third solid electrolyte particle SPT3 may range from about 2.5 $\mu$m to about 5 $\mu$m, for example, from about 3 $\mu$m to about 5 $\mu$m.

The average particle diameter may refer to a diameter ($D_{50}$) of particles having a cumulative volume of 50 vol% in particle size distribution.

As the solid electrolyte particles SPT in the positive electrode active material layer 120 have a relatively small average particle diameter, the solid electrolyte particles SPT in the positive electrode active material layer 120 may fill gaps between the positive electrode active material particles PPT, thereby improving ion conductivity. In contrast, the solid electrolyte particles SPT in the solid electrolyte layer 300 may have a relatively large particle diameter, thereby establishing a robust ion migration pathway.

An average particle diameter of the solid electrolyte particles SPT may be different in each section of the positive electrode active material layer 120. In an example embodiment, in the positive electrode active material layer 120, an average particle diameter ($D_{50}$) of the solid electrolyte particles SPT in a section adjacent to the positive electrode current collector 110 may be greater than the average particle diameter of the solid electrolyte particles SPT in a section adjacent to the solid electrolyte layer 300.

In an example embodiment, an average particle diameter ($D_{50}$) of the solid electrolyte particles SPT included in the first section RG1 of the positive electrode active material layer 120 may be less than the average particle diameter of the solid electrolyte particles SPT included in the second section RG2 of the positive electrode active material layer 120. As a size of the solid electrolyte particles SPT gradually increases in a direction from the positive electrode current collector 110 toward the solid electrolyte layer 300, lithium ions may be effectively transferred and thus ion conductivity may be improved.

The positive electrode active material layer 120 may further include a binder and/or a conductive material. Each of the binder and the conductive material may be the same as the binder and the conductive material discussed above with reference to FIG. 1.

The porous film PW may include a plurality of pores. For example, the porous film PW may have a porosity in a range of about 50% to about 99%, about 60% to about 95%, or about 70% to about 90%. The pores of the porous film PW may each have a size in a range of about 50 nm to about 500 nm or about 100 nm to about 300 nm. When the porosity and the pore size of the porous film PW fall within the ranges above, a positive electrode active material may readily infiltrate into the porous film PW, and the porous film PW may contain an active material in an amount that is sufficient enough to act as a positive electrode self-standing film. The porosity of the porous film PW may be measured using cross-sectional scanning electron microscope (SEM) images. For example, the porosity may be determined by calculating the ratio of the total pore area to the total cross-sectional area of the film using image analysis software (e.g., ImageJ). The pore size may be measured based on the diameters of approximately 20 pores observed in the SEM images. The average diameter of these pores may be used as the representative pore size.

The porous film PW may have a small thickness. The thickness of the porous film PW may range from about 5 $\mu$m to about 20 $\mu$m, from about 5 $\mu$m to about 15 $\mu$m, or from about 8 $\mu$m to about 10 $\mu$m. When the thickness of the porous film PW falls within the ranges above, a loading level of the positive electrode 100 may be improved without substantially interrupting movement of lithium ions in the positive electrode 100.

The porous film PW may have a weight in a range of about 2 g/m$^2$ to about 4 g/m$^2$. For example, the weight of the porous film PW may range from about 2.5 g/m$^2$ to about 3.5 g/m$^2$.

The porous film PW may have a tensile strength in a range of about 0.1 N/mm to about 0.2 N/mm. For example, the tensile strength of the porous film PW may range from about 0.1 N/mm to about 0.13 N/mm.

A permeability per thickness of the porous film PW may range from about 0.1 sec/100 ml to about 1 sec/100 ml. For example, the permeability per thickness of the porous film PW may range from about 0.1 sec/100 ml to about 0.5 sec/100 ml. The permeability may be measured as Gurley values. The Gurley values may be measured by a method in accordance with JIS P8117.

The porous film PW may include at least one of polyester, polyolefin, polyacetal, polyamide, polycarbonate, polyimide, polyether ether ketone, polyether sulfone, polyphenylene oxide, and polyphenylene sulfide. For example, the polyester may include at least one of polyethylene terephthalate, polybutylene terephthalate, polyethylene naphthalate, and the like.

For example, the porous film PW may be or include a porous nonwoven fabric.

FIG. 8 illustrates a subdivided cross-sectional view showing a positive electrode for an all-solid-state battery of FIG. 7. In the example embodiment that follows, a detailed description of technical features redundant to the technical features discussed above with reference to FIG. 7 are omitted, and a difference thereof is discussed in detail.

Referring to FIG. 8, the positive electrode active material layer 120 may be divided into a plurality of sub-layers according to a configuration of the porous film PW and the positive electrode current collector 110. For example, the positive electrode active material layer 120 may include a first subsidiary layer P1 disposed on the positive electrode current collector 110, a second subsidiary layer P2 disposed between the first subsidiary layer P1 and the porous film PW, and a third subsidiary layer P3 disposed on the porous film PW. The third subsidiary layer P3 may be spaced apart from the second subsidiary layer P2 across the porous film PW.

The first subsidiary layer P1 and the second subsidiary layer P2 may be positioned on the first section RG1 discussed above with reference to FIG. 7. The third subsidiary layer P3 may be positioned on the second section RG2 discussed above with reference to FIG. 7.

In an example embodiment, the first subsidiary layer P1 may include the positive electrode active material particle PPT and the first solid electrolyte particle SPT1. The second subsidiary layer P2 may include the positive electrode active material particle PPT and the second solid electrolyte particle SPT2. The third subsidiary layer P3 may include the positive electrode active material particle PPT and the second solid electrolyte particle SPT2.

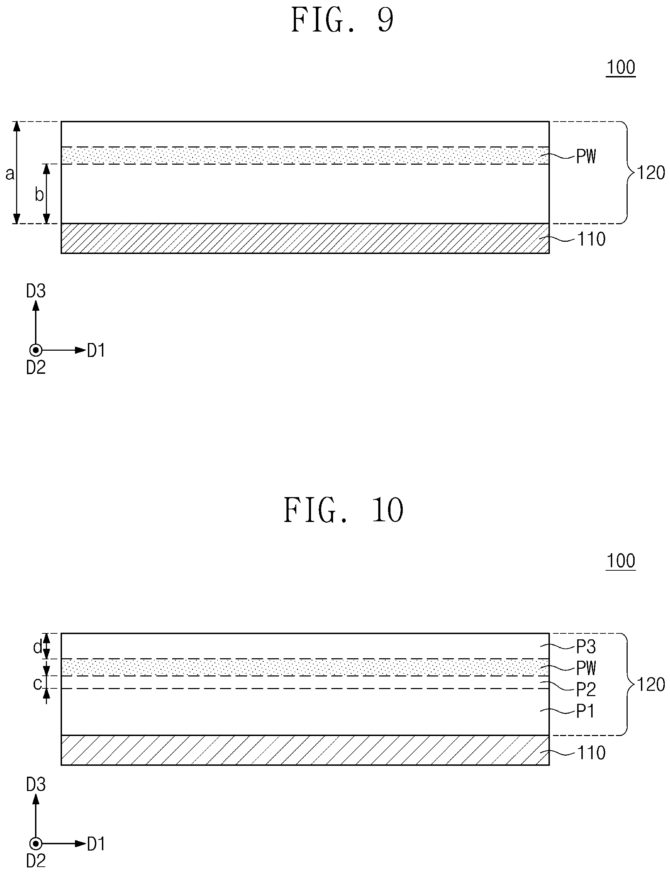

FIGS. 9 and 10 illustrate cross-sectional views showing a positive electrode for an all-solid-state battery, according to an example embodiment, describing a position of a porous film disposed in a positive electrode active material.

Referring to FIGS. 9 and 10, the second subsidiary layer P2 and the third subsidiary layer P3 may have different thicknesses from each other. In an example embodiment, a ratio of a thickness $c$ in the third direction D3 of the second subsidiary layer P2 to a thickness $d$ in the third direction D3 of the third subsidiary layer P3 may range from about 2 to about 10, about 3 to about 10, or about 4 to about 7. For example, the thickness $c$ of the second subsidiary layer P2 may range from about 5 $\mu$m to about 20 $\mu$m, from about 5 $\mu$m to about 15 $\mu$m, or from about 7 $\mu$m to about 10 $\mu$m. The thickness $d$ of the third subsidiary layer P3 may range from about 40 $\mu$m to about 80 $\mu$m, from about 40 $\mu$m to about 70 $\mu$m, or from about 50 $\mu$m to about 70 $\mu$m.

The first subsidiary layer P1 and the second subsidiary layer P2 may have a single unitary shape. No interface may be separately provided between the first subsidiary layer P1 and the second subsidiary layer P2, and an active material included in the first subsidiary layer P1 and an active material included in the second subsidiary layer P2 may be mixed with each other to provide a single mixed active material layer having a single unitary shape. Although not shown in detail, an active material included in the second subsidiary layer P2 may be mixed with an active material that infiltrates into the pores of the porous film PW, thereby providing a mixed active material layer having a single unitary shape. An active material included in the third subsidiary layer P3 may be mixed with an active material that infiltrates into the pores of the porous film PW, thereby providing a mixed active material layer having a single unitary shape. For example, in the positive electrode active material layer 120, an active material included in the first subsidiary layer P1, an active material included in the second subsidiary layer P2, an active material included in the third subsidiary layer P3, and an active material that infiltrates into the pore of the porous film PW, may be mixed with each other to provide a single mixed active material layer.

Referring still to FIGS. 9 and 10, the positive electrode active material layer 120 may have a first thickness $a$, and the porous film PW may be located in the positive electrode active material layer 120 at a first distance $b$ from the positive electrode current collector 110. The first thickness $a$ and the first distance $b$ may satisfy the relationship of Equation 1 below. The first thickness $a$ and the first distance $b$ may each have a unit of micrometer ($\mu$m).

$$\text{Equation 1:}$$

$$0.5 < (b/a) < 0.8$$

For example, the first distance $b$ between the porous film PW and the positive electrode current collector 110 may be in a range of about 50% to about 80% of the first thickness $a$, or total thickness, of the positive electrode active material layer 120. In an example embodiment, the first distance $b$ between the porous film PW and the positive electrode current collector 110 may be in a range of about 55% to about 75% or about 55% to about 70% of the total thickness $a$ of the positive electrode active material layer 120. When the first distance $b$ between the porous film PW and the positive electrode current collector 110 and the first thickness $a$ of the positive electrode active material layer 120 satisfy the relationship of Equation 1 above, an all-solid-state battery may achieve a high current density while exhibiting desired or improved cycle-life characteristics.

In an example embodiment, the first thickness $a$ of the positive electrode active material layer 120 may range from about 100 $\mu$m to about 200 $\mu$m, from about 120 $\mu$m to about 180 $\mu$m, or from about 140 $\mu$m to about 150 $\mu$m. In an example embodiment, the first distance $b$ between the porous film PW and the positive electrode current collector 110 may range from about 50 $\mu$m to about 160 $\mu$m, from about 70 $\mu$m to about 100 $\mu$m, or from about 80 $\mu$m to about 90 $\mu$m.

According to some example embodiments of the present disclosure, the positive electrode 100 for an all-solid-state battery may include the porous film PW located in the positive electrode active material layer 120, and the positive electrode active material layer 120 may include a plurality of subsidiary layers on upper and lower sides of the porous film PW, thereby achieving a high loading level. In this disclosure, the term "loading level" may refer to an amount of an active material per unit area of an electrode, and may be a factor designed by considering a diffusion coefficient of lithium ions, conduction between particles, and a path to a current collector. In the positive electrode 100 for an all-solid-state battery according to an example embodiment, based on the positive electrode active material layer 120 located on one side of the positive electrode current collector 110, positive electrode active material particles may have a loading level that is equal to or greater than about 35 mg/cm$^2$, for example, equal to or greater than about 40 mg/cm$^2$ or equal to or greater than about 45 mg/cm$^2$. When the positive electrode active material layers 120 are coated on opposite sides of the positive electrode current collector 110, positive electrode active materials may have a loading level that is equal to or greater than about 70 mg/cm$^2$, equal to or greater than about 80 mg/cm$^2$, or equal to or greater than about 90 mg/cm$^2$.

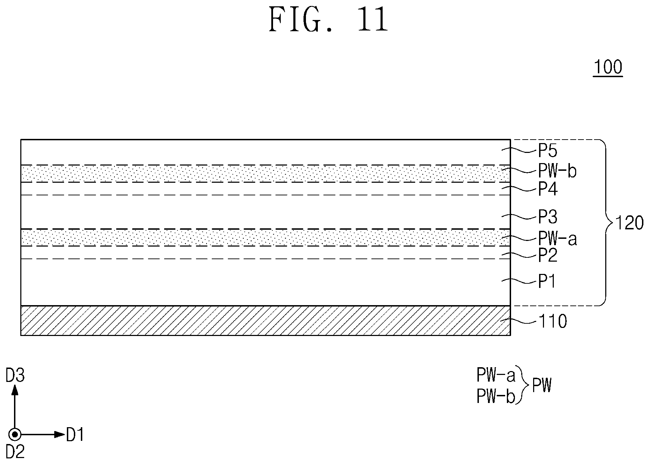

FIG. 11 illustrates a cross-sectional view showing a positive electrode for an all-solid-state battery according to an embodiment of the present disclosure. In the embodiment that follows, a detailed description of technical features redundant to those discussed above with reference to FIGS. 7 to 10 is omitted, and a difference thereof is explained in detail.

Referring to FIG. 11, the positive electrode 100 for an all-solid-state battery according to an example embodiment may include a positive electrode current collector 110, a positive electrode active material layer 120 on the positive electrode current collector 110, and a porous film PW disposed in the positive electrode active material layer 120. The porous film PW may include a plurality of subsidiary porous films.

For example, the positive electrode 100 for an all-solid-state battery according to an example embodiment may be configured such that the positive electrode active material layer 120 may be provided therein with a first subsidiary porous film PW-a and a second subsidiary porous film PW-b. The second subsidiary porous film PW-b may be spaced apart from the positive electrode current collector 110 across the first subsidiary porous film PW-a.

Each of, or at least one of, the plurality of subsidiary porous film PW-a and PW-b may be disposed in the positive electrode active material layer 120, and positive electrode active material particles included in the positive electrode active material layer 120 may infiltrate into each of the subsidiary porous films PW-a and PW-b.

A first subsidiary layer P1 and a second subsidiary layer P2 may have a single unitary shape. No interface may be separately provided between the first subsidiary layer P1 and the second subsidiary layer P2, and an active material included in the first subsidiary layer P1 and an active material included in the second subsidiary layer P2 may be mixed with each other to provide a single mixed active material layer having a single unitary shape. A third subsidiary layer P3 and a fourth subsidiary layer P4 may also have a single unitary shape. No interface may be separately provided between the third subsidiary layer P3 and the fourth subsidiary layer P4, and an active material included in the third subsidiary layer P3 and an active material included in the fourth subsidiary layer P4 may be mixed with each other to provide a single mixed active material layer having a single unitary shape.

Although not shown in detail, an active material included in the second subsidiary layer P2 and an active material included in the third subsidiary layer P3 may be mixed with active materials that infiltrate into the pores of the first subsidiary porous film PW-a, thereby providing a mixed active material layer having a single unitary shape. An active material included in the fourth subsidiary layer P4 and an active material included in a fifth subsidiary layer P5 may be mixed with active materials that infiltrate into the pores of the second subsidiary porous film PW-b, thereby providing a mixed active material layer having a single unitary shape. For example, in the positive electrode active material layer 120, an active material included in each of the first to fifth subsidiary layers P1 to P5 and an active material that infiltrates into the pores of each of the first and second subsidiary porous films PW-a and PW-b may be mixed together to provide a single mixed active material layer having a single unitary shape.

In an example embodiment, each of, or at least one of, the first to fifth subsidiary layers P1 to P5 may include positive electrode active material particles PPT and solid electrolyte particles SPT. An average particle diameter ($D_{50}$) of the solid electrolyte particle SPT may increase in a direction from the first subsidiary layer P1 toward the fifth subsidiary layer P5. For example, the first subsidiary layer P1 may include a first solid electrolyte particle SPT1. Each of, or at least one of, the second subsidiary layer P2 and the third subsidiary layer P3 may include a second solid electrolyte particle SPT2. Each of, or at least one of, the fourth subsidiary layer P4 and the fifth subsidiary layer P5 may include a second solid electrolyte particle SPT2 and a third solid electrolyte particle SPT3. The average particle diameter ($D_{50}$) of the solid electrolyte particle SPT in the first subsidiary layer P1 may be less than the average particle diameter of the solid electrolyte particle SPT in the third subsidiary layer P3. The average particle diameter ($D_{50}$) of the solid electrolyte particle SPT in the third subsidiary layer P3 may be less than the average particle diameter of the solid electrolyte particle SPT in the fifth subsidiary layer P5.

The following describes a method of manufacturing a positive electrode for an all-solid-state battery, according to an example embodiment.

A method of manufacturing a positive electrode for an all-solid-state battery may include preparing a first positive electrode slurry including a first solid electrolyte particle, coating on a positive electrode current collector the first positive electrode slurry to form a first preliminary active material layer, placing on the first preliminary active material layer a composite layer including a porous film, and pressing the positive electrode current collector, the first preliminary active material layer, and the composite layer that are stacked together, e.g., sequentially stacked together.

The method of manufacturing a positive electrode for an all-solid-state battery may further include forming a composite layer. The formation of the composite layer may include preparing a second positive electrode slurry including a second solid electrolyte particle and coating on a preliminary porous film the second positive electrode slurry to from the composite layer.

The formation of the first preliminary active material layer on the positive electrode current collector may include coating and drying the first positive electrode slurry on the positive electrode current collector.

The first positive electrode slurry may include a positive electrode active material, a first solid electrolyte particle, a conductive material, and a binder. A description of the positive electrode active material, the conductive material, and the binder included in the first positive electrode slurry may be the same as the description discussed above with reference to FIG. 1. The first solid electrolyte particle may be the same as the first solid electrolyte particle discussed above with reference to FIGS. 7 and 8.

In an example embodiment, the first positive electrode slurry may include, as the binder, at least one of styrene-butadiene rubber, polytetrafluoroethylene, polyvinylidenefluoride, polyethylene, polyvinyl alcohol, vinylidenefluoride/hexafluoropropylene copolymers, polyvinylidenefluoride/hexafluoropropylene copolymers, polyacrylonitrile, and polymethyl methacrylate.

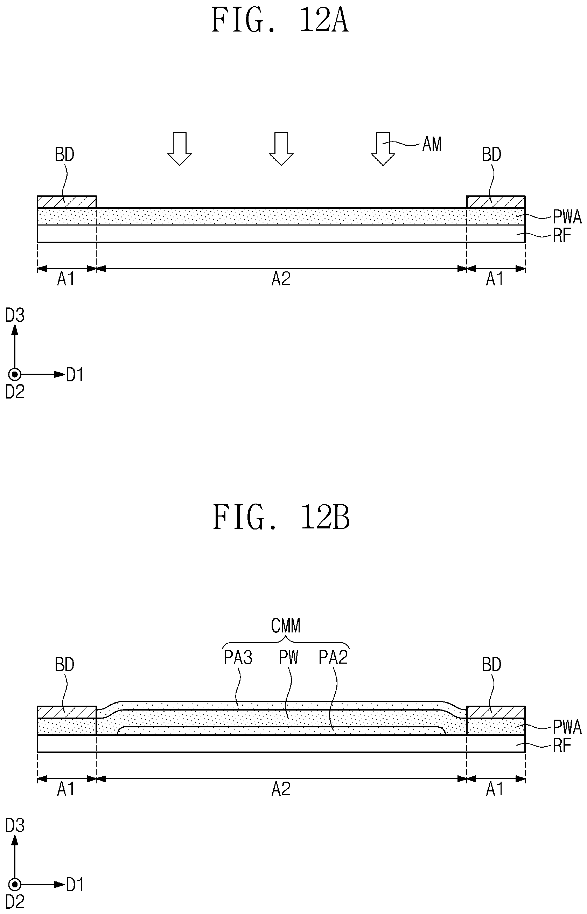

FIGS. 12A and 12B illustrate cross-sectional views showing a method of forming a composite layer, according to an example embodiment of the present disclosure.

Referring to FIGS. 12A and 12B, a preliminary porous film PWA may be provided on a release film RF. The release film RF may be placed on a plane defined by a first direction D1 and a second direction D2. The second direction D2 may intersect the first direction D1. The preliminary porous film PWA may be stacked along a third direction D3 on the release film RF. The third direction D3 may intersect each of the first direction D1 and the second direction D2. As discussed above, the preliminary porous film PWA may include a plurality of pores. The pores of the preliminary porous film PWA may each have a size in a range of about 50 nm to about 500 nm. The preliminary porous film PWA may have a small thickness. The preliminary porous film PWA may have a thickness in a range of about 5 $\mu$m to about 20 $\mu$m. For example, the thickness of the preliminary porous film PWA may range from about 5 $\mu$m to about 15 $\mu$m, or about 8 $\mu$m to about 12 $\mu$m. In an example embodiment, the preliminary porous film PWA may be or include a porous nonwoven fabric.

As shown in FIG. 12A, a binder BD may be laminated on the preliminary porous film PWA. The preliminary porous film PWA may include a first region A1 on which the binder BD is laminated, and a second region A2 which does not overlap with the binder BD in the direction D3, and the first region A1 may be located on opposite or end sides of the preliminary porous film PWA. The second region A2 may be an area other than the first region A1.

The binder BD may be formed by being coated and then cured on the first region A1 of the preliminary porous film PWA. The binder BD may include at least one of a thermosetting resin and an ultraviolet curable resin.

After the formation of the binder BD, a second positive electrode slurry AM may be provided or coated on the preliminary porous film PWA. The second positive electrode slurry AM may be provided on the second region A2 of the preliminary porous film PWA.

The second positive electrode slurry AM may include at least one of a positive electrode active material, a second solid electrolyte particle, a conductive material, and a binder. A description of the positive electrode active material, the conductive material, and the binder included in the second positive electrode slurry AM may be the same as the description discussed above with reference to FIG. 2. The second solid electrolyte particle may be substantially the same as the second solid electrolyte particle discussed with reference to FIGS. 7 and 8. An average particle diameter ($D_{50}$) of the second solid electrolyte particle may be greater than the average particle diameter of the first solid electrolyte particle.

In an example embodiment, the second positive electrode slurry AM may include, as the binder, at least one of styrene-butadiene rubber, polytetrafluoroethylene, polyvinylidenefluoride, polyethylene, polyvinyl alcohol, vinylidenefluoride/hexafluoropropylene copolymers, polyvinylidenefluoride/hexafluoropropylene copolymers, polyacrylonitrile, and polymethyl methacrylate.

After the second positive electrode slurry AM is coated on the preliminary porous film PWA, the second positive electrode slurry AM may be cured.

The second positive electrode slurry AM provided on the second region A2 of the preliminary porous film PWA may infiltrate into the preliminary porous film PWA. For example, when the second positive electrode slurry AM is provided or deposited on the second region A2, the second positive electrode slurry AM may infiltrate into the pores of the preliminary porous film PWA. The second positive electrode slurry AM may infiltrate into the pores of the preliminary porous film PWA to form a porous film PW which pores are filled with the second positive electrode slurry AM.

After the second positive electrode slurry AM is coated and infiltrates into the preliminary porous film PWA, at least a portion of the second region A2 of the porous film PW may be spaced apart from the release film RF. A portion of the second positive electrode slurry AM may move through the pores of the porous film PW such that a second preliminary active material layer PA2 may be formed between the porous film PW and the release film RF. A portion of the second positive electrode slurry AM may not pass through the porous film PW to form a third preliminary active material layer PA3 on the porous film PW.

The second preliminary active material layer PA2 that moves through the pores of the porous film PW may have a thickness that is less than the thickness of the third preliminary active material layer PA3 that does not pass through the porous film PW. In an example embodiment, a thickness ratio of the third preliminary active material layer PA3 to the second preliminary active material layer PA2 may range from about 2 to about 10, from about 3 to about 10, or from about 4 to about 7.

Although not shown in detail, the positive electrode active material included in each of the second preliminary active material layer PA2 and the third preliminary active material layer PA3 may have a single unitary shape with an active material impregnated in the porous film PW. After the second positive electrode slurry AM is coated and cured, a composite layer CMM may be formed which includes the second preliminary active material layer PA2, the third preliminary active material layer PA3, and the porous film PW interposed between the second and third preliminary active material layers PA2 and PA3.

The release film RF may be subsequently peeled off. For example, the release film RF may be separated from the composite layer CMM. Thus, the release film RF may include a material capable of being separated from the composite layer CMM. For example, the release film RF may include at least one of polyethylene terephthalate, polypropylene, polymethyl pentene, and any copolymer thereof.

The porous film PW included in the composite layer CMM may have a self-standing film shape. The self-standing film may refer to a thin layer or a film that maintains a given shape on its own without being supported by another substrate. In an example embodiment, the composite layer CMM may have a shape constituted by components depicted in FIG. 12B from which are removed the release film RF, the binder BD, and the preliminary porous film PWA on the first region A1.

The composite layer CMM may have a substantially uniform thickness. The composite layer CMM may have a thickness in a range of about 50 $\mu$m to about 500 $\mu$m. For example, the thickness of the composite layer CMM may range from about 60 $\mu$m to about 300 $\mu$m, from about 80 $\mu$m to about 200 $\mu$m, or from about 100 $\mu$m to about 200 $\mu$m.

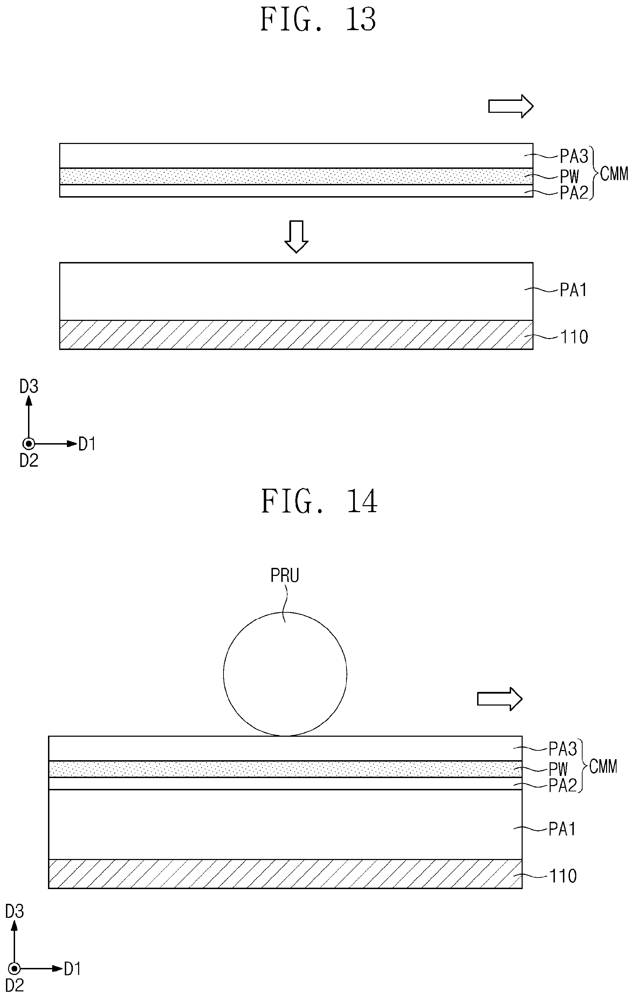

FIGS. 13 to 15 illustrate cross-sectional views showing a method of manufacturing a positive electrode for an all-solid-state battery, according to an example embodiment of the present disclosure.

Referring to FIGS. 13 and 14, a composite layer CMM may be provided on a first preliminary active material layer PA1 formed on a positive electrode current collector 110. For example, the composite layer CMM may be formed according to the detailed description in connection with FIGS. 12A and 12B, and may be provided on the first preliminary active material layer PA1 located on one side of the positive electrode current collector 110. When the composite layer CMM is provided on the first preliminary active material layer PA1, a second preliminary active material layer PA2 may be provided adjacent to the first preliminary active material layer PA1.

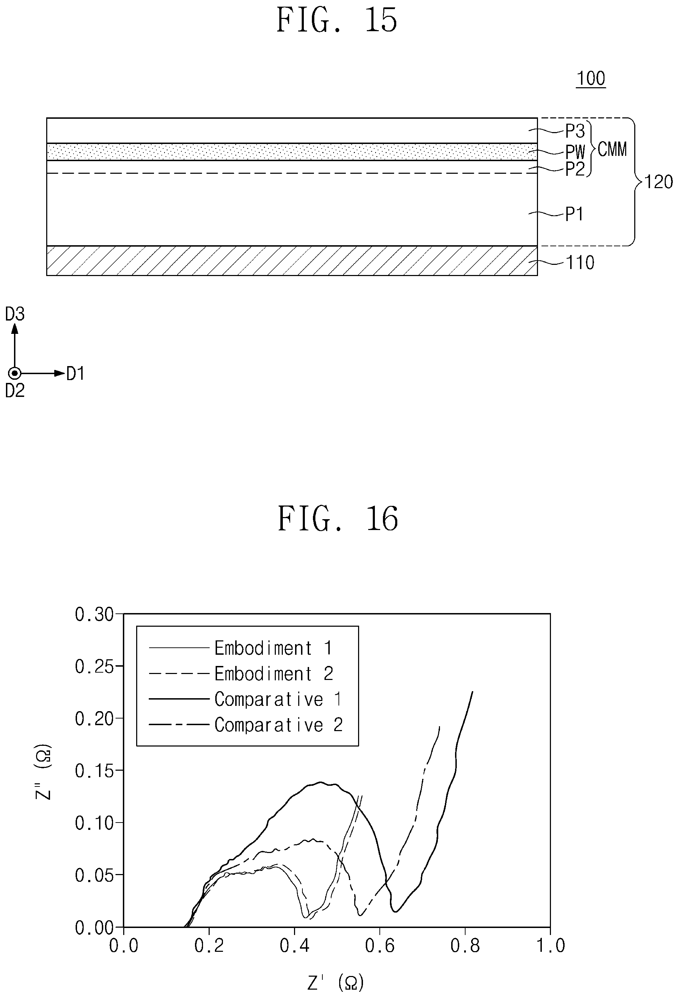

Referring to FIGS. 14 and 15, after the formation of the composite layer CMM, the positive electrode current collector 110, the first preliminary active material layer PA1, and the composite layer CMM, which are stacked, e.g., sequentially stacked, may be integrally pressed together. A pressing unit PRU may press the positive electrode current collector 110, the first preliminary active material layer PA1, and the composite layer CMM that are stacked, e.g., sequentially stacked.

The pressing unit PRU may include a pressing roller. The pressing unit PRU may roll the positive electrode current collector 110, the first preliminary active material layer PA1 on the positive electrode current collector 110, and the composite layer CMM on the first preliminary active material layer PA1.

After the pressing process using the pressing unit PRU, a positive electrode active material layer 120 may be formed. The positive electrode active material layer 120 may include a plurality of subsidiary layers P1, P2, and P3. The positive electrode active material layer 120 may include a first subsidiary layer P1 located on one side of the positive electrode current collector 110, a second subsidiary layer P2 between the first subsidiary layer P1 and the porous film PW, and a third subsidiary layer P3 located on the porous film PW. The third subsidiary layer P3 may be spaced apart from the second subsidiary layer P2 across the porous film PW. The first subsidiary layer P1 may be derived from the first preliminary active material layer PA1, the second subsidiary layer P2 may be derived from the second preliminary active material layer PA2, and the third subsidiary layer P3 may be derived from the third preliminary active material layer PA3.

The first subsidiary layer P1 and the second subsidiary layer P2 may have a single unitary shape. No interface may be separately provided between the first subsidiary layer P1 and the second subsidiary layer P2, and an active material included in the first subsidiary layer P1 and an active material included in the second subsidiary layers P2 may be mixed with each other to provide a single mixed active material layer having a single unitary shape. Although the first subsidiary layer P1 and the second subsidiary layer P2 are respectively derived from the first preliminary active material layer PA1 and the second preliminary active material layer PA2, the pressing process may force the first subsidiary layer P1 and the second subsidiary layer P2 to mix with each other to have a single unitary shape.

Although not shown in detail, an active material included in the second subsidiary layer P2 may be mixed with an active material that infiltrates into the pores of the porous film PW, thereby providing a mixed active material layer having a single unitary shape. An active material included in the third subsidiary layer P3 may be mixed with an active material that infiltrates into the pores of the porous film PW, thereby providing a mixed active material layer having a single unitary shape. For example, in the positive electrode active material layer 120, an active material included in the first subsidiary layer P1, an active material included in the second subsidiary layer P2, an active material included in the third subsidiary layer P3, and an active material that infiltrates into the pore of the porous film PW may be mixed with each other to produce one mixed active material layer.

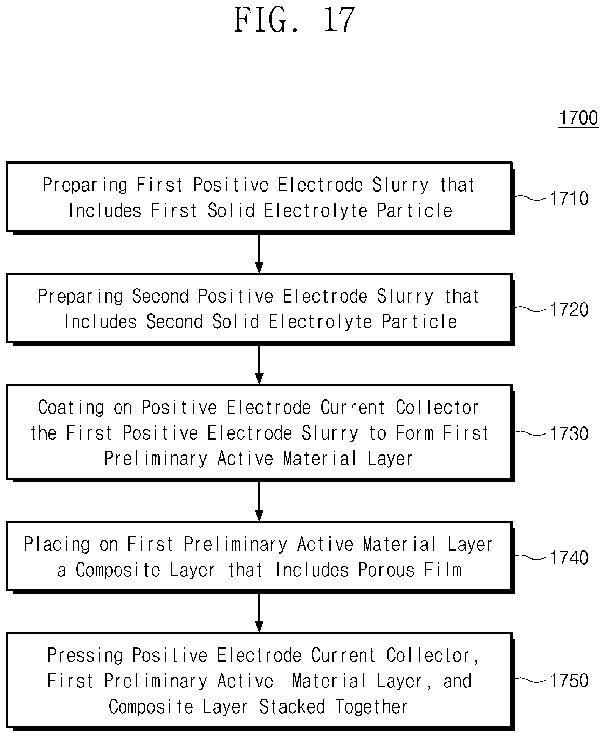

FIG. 17 is a flow chart illustrating a method manufacturing a positive electrode for an all-solid-state battery, according to various example embodiments. In examples, the method 1700 includes operation 1710 which includes preparing a first positive electrode slurry that comprises a first solid electrolyte particle. Operation 1720 includes preparing a second positive electrode slurry that comprises a second solid electrolyte particle. For example, an average particle diameter of the first solid electrolyte particle is different from an average particle diameter of the second solid electrolyte particle. In another example, the average particle diameter of the second solid electrolyte particle is greater than the average particle diameter of the first solid electrolyte particle. Operation 1730 includes coating on a positive electrode current collector the first positive electrode slurry to form a first preliminary active material layer.

Operation 1740 includes placing on the first preliminary active material layer a composite layer that comprises a porous film. For example, placing the composite layer includes forming the composite layer by providing a preliminary porous film, and coating on the preliminary porous film the second positive electrode slurry to form the composite layer. In another example, In an example, the porous film is formed by allowing a positive electrode active material to infiltrate into the preliminary porous film. For example, a thickness of the preliminary porous film is in a range of about 5 $\mu$m to about 15 $\mu$m. In another example, a size of pores in the preliminary porous film is in a range of about 50 nm to about 500 nm. In a further example, a porosity of the preliminary porous film is in a range of about 50% to about 99%. In yet another example, the composite layer comprises a second preliminary active material layer, a third preliminary active material layer, and the porous film between the second preliminary active material layer and the third preliminary active material layer, and the positive electrode current collector, the first preliminary active material layer, and the composite layer are integrally pressed together, such that the first preliminary active material layer, the second preliminary active material layer, and the third preliminary active material layer are formed into a single unitary shape to form one mixed active material layer. Operation 1750 includes pressing the positive electrode current collector, the first preliminary active material layer, and the composite layer that are stacked together.

The following describes some example embodiments and comparative examples of the present disclosure. The following embodiments, however, are merely examples, and the present disclosure is not limited to example embodiments discussed below.

Embodiment 1

Manufacture of Positive Electrode:

A powder of $LiNi_{0.8}Co_{0.15}Mn_{0.05}O_2$ (NCM) was prepared as a positive electrode active material. An argyrodite-type first solid electrolyte particle (e.g., $Li_6PS_5Cl$) of 1 $\mu$m in average particle diameter ($D_{50}$) was prepared as a solid electrolyte, polyvinylidenefluoride (PVDF) was prepared as a binder, and carbon nano-fiber (CNF) was prepared as a conductive material.

The positive electrode active material, the solid electrolyte, the conductive material, and the binder were mixed in a weight ratio of about 85 : 13.5 : 0.5 : 1 in an N-methyl pyrrolidone solvent to prepare a first positive electrode slurry. The first positive electrode slurry was coated and dried on an aluminum positive electrode current collector, and then pressed to manufacture a first positive electrode plate.

Separately, a second positive electrode slurry was prepared according to the same method used for preparing the first positive electrode slurry, with a difference that the first solid electrolyte particle was replaced with an argyrodite-type second solid electrolyte particle ($Li_6PS_5Cl$) of 2 $\mu$m in average particle diameter ($D_{50}$).

The second positive electrode slurry was coated on a porous nonwoven fabric of 10 $\mu$m in thickness to prepare a positive electrode active material composite layer in the form of a self-standing film. The prepared positive electrode active material composite layer was stacked on the first positive electrode plate to allow the porous nonwoven fabric to reside close to the positive electrode current collector, and then the mixture was pressed to manufacture a positive electrode.

The pressing process was carried out at 25°C using a pressing roller where a linear pressure of the pressing roller was controlled to 2.3 tons, and a gap between upper and lower rollers was adjusted to zero to press the positive electrode, with the result that a thickness of the pressed positive electrode was reduced to obtain a high mixture density. The positive electrode was manufactured to allow its positive electrode active material disposed on one side of the current collector to have a loading level of 45 mg/cm$^2$.

A total thickness of the manufactured positive electrode was 150 $\mu$m, and a distance of 90 $\mu$m was provided between the positive electrode current collector and the porous nonwoven fabric.

Preparation of Solid Electrolyte Layer:

An argyrodite-type third solid electrolyte particle (e.g., $Li_6PS_5Cl$, , $D_{50}$=3.0 $\mu$m) was added to an isobutylyl isobutylate binder solution added with an acrylate-based polymer to prepare a solid electrolyte slurry (the solid electrolyte and the binder were mixed in a weight ratio of 98.7 : 1.3). The prepared solid electrolyte slurry was coated on a release film of polytetrafluoroethylene, and dried for 2 hours at 60°C to manufacture a solid electrolyte layer of 100 $\mu$m in thickness.

Manufacture of Negative Electrode:

90 wt% of silver (Ag) nano-particles ($D_{50}$: 60 nm) and 10 wt% of carbon black were mixed in a water solvent to prepare a negative electrode coating layer slurry. The carbon black was a mixture of single particles having a particle diameter of 38 nm and secondary particles having a particle diameter of 275 nm in which primary particles having a particle diameter of 76 nm were aggregated. The slurry was coated on a foil-type current collector of stainless steel, and then dried to manufacture a negative electrode including a negative electrode coating layer of 12 $\mu$m in thickness and a current collector of 10 $\mu$m in thickness.

All-Solid-State Battery:

The positive electrode, the solid electrolyte layer, and the negative electrode were stacked, and a warm isostatic press was performed for about 30 minutes at 85°C under a pressure of 500 MPa to fabricate an all-solid-state battery.

Embodiment 2

A positive electrode, a solid electrolyte layer, a negative electrode, and an all-solid-state battery were each fabricated in independently the same method as the method in Embodiment 1, with a difference that 1) a first solid electrolyte particle of 1.5 $\mu$m in average particle diameter ($D_{50}$) was used when the first positive electrode slurry was prepared, and 2) a second solid electrolyte particle of 2.5 $\mu$m in average particle diameter ($D_{50}$) was used when the second positive electrode slurry was prepared.

Comparative 1

A positive electrode, a solid electrolyte layer, a negative electrode, and an all-solid-state battery were each fabricated in independently the same method as the method in Embodiment 1, with a difference that the second solid electrolyte particle (e.g., $Li_6PS_5Cl$) of 2.0 $\mu$m in average particle diameter ($D_{50}$) was replaced with the first solid electrolyte particle of 1.0 $\mu$m in average particle diameter ($D_{50}$) when the second positive electrode slurry was prepared.
For example, differently from Embodiment 1 where the first and second solid electrolyte particles were included in the positive electrode, only the first solid electrolyte particle was included in the positive electrode.

Comparative 2

A positive electrode was manufactured in the same method as the method in Embodiment 1, with a difference that, when the positive electrode was manufactured, a positive electrode active material composite layer in a self-standing film shape was stacked on the first positive electrode plate to allow the porous nonwoven fabric to reside far away from the positive electrode current collector and pressed to have a loading level of 56 mg/cm$^2$.
A total thickness of the manufactured positive electrode was 150 $\mu$m, and a distance of 140 $\mu$m was provided between the positive electrode current collector and the porous nonwoven fabric.

Evaluation 1: Ionic Conductivity of Positive Electrode

An ionic conductivity of each of the cells according to Embodiments and Comparatives was measured as follows. The positive electrode according to each of Embodiment 1 and Comparative 1 was sampled to a thickness of 150 $\mu$m and a diameter of 12 mm. An impedance analyzer (Solartron 1260A Impedance/Gain-Phase Analyzer) was used to execute a 2-probe method to measure impedance and obtain a Nyquist plot (25°C, frequency range of 0.1 Hz to 1 MHz, and amplitude voltage of 10 mV). A bulk resistance was obtained from an arc of the Nyquist plot about the impedance measurement result, and an ionic resistance was calculated considering area and a thickness of the sample. The result is shown in Table 1 below and FIG. 16.

Table 1:

|  | Ionic resistance [$\Omega$] |
|---|---|
| Embodiment 1 | 0.288 |
| Embodiment 2 | 0.296 |
| Comparative 1 | 0.413 |
| Comparative 2 | 0.496 |

Referring to Table 1, it may be observed that an ionic conductivity of the positive electrode according to each of Embodiments 1 and 2 is less than the ionic conductivity of the positive electrode according to each of Comparatives 1 and 2. For example, it may be observed that the positive electrode according to each of Embodiments 1 and 2 exhibits a desired or improved ionic conductivity. Therefore, it may be ascertained that an ionic conductivity is increased when an average particle diameter of the solid electrolyte particle in the positive electrode active material composite layer is greater than an average particle diameter of the solid electrolyte particle in the first positive electrode plate.

Evaluation 2: Cycle-Life Characteristics

Each of the all-solid-state batteries according to Embodiments 1 and 2 and Comparatives 1 and 2 was charged and discharged. A first charge/discharge cycle was executed under the following conditions: charge (0.33 C CC/CV charging 4.25 V 0.05 C cut) and discharge (0.33 C CC discharging 3.0 V cut). A second charge/discharge cycle and subsequent charge/discharge cycles were executed under the following conditions: charge (1.0 C CC/CV charging 4.25 V 0.05 C cut) and discharge (0.5 C CC discharging 3.0 V cut). After charge/discharge cycles were continuously performed, a cycle number (cyc) at which a capacity retention rate reached 80% was defined as cycle-life characteristics. A capacity retention rate at an $N^{th}$ cycle was calculated according to Mathematical Equation 2 below.

Capacity retention rate (%) = [discharge capacity at $N^{th}$ cycle/discharge capacity at $1^{st}$ cycle] $\times$ 100        Equation 2:

Table 2:

| | Cycle-life characteristics (charge/discharge cycle number at SOH reached 80%) |
|---|---|
| Embodiment 1 | 210 cyc |
| Embodiment 2 | 205 cyc |
| Comparative 1 | 100 cyc |
| Comparative 2 | 60 cyc |

Referring to Table 2, it may be ascertained that, differently from Embodiment 1, the all-solid-state battery of Comparative 2, in which the self-standing film typed composite layer is flipped and stacked on the first positive electrode plate, has significantly reduced cycle-life characteristics. Moreover, it may be ascertained that, in the case of the all-solid-state batteries of Embodiments 1 and 2 where the solid electrolyte particles in the positive electrode have different sizes, cycle-life characteristics are improved compared to the all-solid-state battery of Comparative 1 where the solid electrolyte particles in the positive electrode have the same size.

In a positive electrode for an all-solid-state battery and an all-solid-state battery including the same according to the present inventive concepts, a high loading level may be achieved caused by a porous film that is disposed in a positive electrode active material layer and in which an active material is impregnated. Therefore, the all-solid-state battery including the positive electrode according to an example embodiment may exhibit a high current density. In addition, an average particle diameter of solid electrolyte particles may be different in each section of the positive electrode active material layer, and thus an ionic conductivity may be improved.

A method of manufacturing a positive electrode for an all-solid-state battery according to examples of the present inventive concepts may have a low manufacturing difficulty and is suitable for mass production.

## Claims

1. A positive electrode (100) for an all-solid-state battery (10), the positive electrode (100) comprising:

   a positive electrode current collector (110);
   a positive electrode active material layer (120) on the positive electrode current collector (110); and
   a porous film (PW) in the positive electrode active material layer (120),
   wherein the positive electrode active material layer (120) comprises positive electrode active material particles (PPT) and solid electrolyte particles (SPT),
   wherein the positive electrode active material layer (120) has a first section (RG1) and a second section (RG2) that are distinct across the porous film (PW),
   wherein the first section (RG1) is between the positive electrode current collector (110) and the porous film (PW), and
   wherein an average particle diameter ($D_{50}$) of the solid electrolyte particles (SPT) in the first section (RG1) is different from an average particle diameter ($D_{50}$) of the solid electrolyte particles (SPT) in the second section (RG2).

2. The positive electrode (100) of claim 1, wherein:

   the solid electrolyte particles (SPT) comprise a first solid electrolyte particle (SPT1) and a second solid electrolyte particle (SPT2),
   the first section (RG1) comprises the first solid electrolyte particle (SPT1),
   the second section (RG2) comprises the second solid electrolyte particle (SPT2), and
   an average particle diameter ($D_{50}$) of the second solid electrolyte particle (SPT2) is greater than an average particle diameter ($D_{50}$) of the first solid electrolyte particle (SPT1).

3. The positive electrode (100) of claim 2, wherein the first section (RG1) further comprises the second solid electrolyte particle (SPT2).

4. The positive electrode (100) according to any of claims 2 or 3, wherein the average particle diameter ($D_{50}$) of the first solid electrolyte particle (SPT1) is equal to or less than 1.5 $\mu$m.

5. The positive electrode (100) according to any of claims 2 to 4, wherein the average particle diameter ($D_{50}$) of the second solid electrolyte particle (SPT2) is in a range of 1.5 $\mu$m to 2.5 $\mu$m.

6. The positive electrode (100) according to any of the previous claims, wherein the positive electrode active material layer (120) comprises:

   a first subsidiary layer (P1) on the positive electrode current collector (110);
   a second subsidiary layer (P2) between the first subsidiary layer (P1) and the porous film (PW); and
   a third subsidiary layer (P3) on the porous film (PW),
   wherein the first subsidiary layer (P1) and the second subsidiary layer (P2) are in the first section (RG1), and
   wherein the third subsidiary layer (P3) is in the second section (RG2).

7. The positive electrode (100) of claim 6, wherein:

   the first subsidiary layer (P1) comprises a first solid electrolyte particle (SPT1),
   at least one of the second and third subsidiary layers (P2, P3) comprises a second solid electrolyte particle (SPT2), and
   an average particle diameter ($D_{50}$) of the second solid electrolyte particle (SPT2) is greater than an average particle diameter ($D_{50}$) of the first solid electrolyte particle (SPT1).

8. The positive electrode (100) according to any of the previous claims, wherein, based on the positive electrode active material layer (120) on one side of the positive electrode current collector (110), a loading level of the positive electrode active material particles (PPT) is equal to or greater than 35 mg/cm$^2$.

9. An all-solid-state battery (10), comprising:

   the positive electrode (100) as set forth in any of the previous claims;
   a negative electrode (200) opposite to the positive electrode (100); and
   a solid electrolyte layer (300) between the positive electrode (100) and the negative electrode (200).

10. The all-solid-state battery (10) of claim 9, wherein the solid electrolyte layer (300) comprises a third solid electrolyte particle (SPT3),
    wherein an average particle diameter ($D_{50}$) of the third solid electrolyte particle (SPT3) is in a range of 2.5 $\mu$m to 5 $\mu$m.

11. A method of manufacturing a positive electrode (100), preferably a positive electrode (100) configured according to any of claims 1 to 8, for an all-solid-state battery (10), the method comprising:

    preparing a first positive electrode slurry that comprises a first solid electrolyte particle (SPT1);
    preparing a second positive electrode slurry (AM) that comprises a second solid electrolyte particle (SPT2);
    coating on a positive electrode current collector (110) the first positive electrode slurry to form a first preliminary active material layer (PA1);
    placing on the first preliminary active material layer (PA1) a composite layer (CMM) that comprises a porous film (PW); and
    pressing the positive electrode current collector (110), the first preliminary active material layer (PA1), and the composite layer (CMM) that are stacked together,
    wherein placing the composite layer (CMM) comprises forming the composite layer (CMM) by:

       providing a preliminary porous film (PWA); and
       coating on the preliminary porous film (PWA) the second positive electrode slurry (AM) to form the composite layer (CMM),

    wherein an average particle diameter ($D_{50}$) of the first solid electrolyte particle (SPT1) is different from an average particle diameter ($D_{50}$) of the second solid electrolyte particle (SPT2).

12. The method of claim 11, wherein the average particle diameter ($D_{50}$) of the second solid electrolyte particle (SPT2) is greater than the average particle diameter ($D_{50}$) of the first solid electrolyte particle (SPT1).

13. The method according to claims 11 or 12, wherein:

the composite layer (CMM) comprises a second preliminary active material layer (PA2), a third preliminary active material layer (PA3), and the porous film (PW) between the second preliminary active material layer (PA2) and the third preliminary active material layer (PA3), and

the positive electrode current collector (110), the first preliminary active material layer (PA1), and the composite layer (CMM) are integrally pressed together, such that the first preliminary active material layer (PA1), the second preliminary active material layer (PA2), and the third preliminary active material layer (PA3) are formed into a single unitary shape to form one mixed active material layer.

14. The method according to any of claims 11 to 13, wherein the porous film (PW) is formed by allowing a positive electrode active material to infiltrate into the preliminary porous film (PWA).

15. The method according to any of claims 11 to 14, wherein a porosity of the preliminary porous film (PWA) is in a range of 50% to 99%.

# FIG. 1

10

110 ⎱
     ⎰ 100
120

300

220 ⎱
     ⎰ 200
210

D3
→ D1

# FIG. 2

10

110 ⎱
     ⎰ 100
120

TK1

310 ⎱
     ⎰ 300
320

TK2

220 ⎱
     ⎰ 200
210

D3
→ D1

# FIG. 3

10

WI2

WI1

WI4 WI3

100
310
320
200

A A'

D2
D3 D1

# FIG. 4

10

WI1

110 } 100
120
310 } 300
320
220 } 200
210

A          A'

WI2

D3

D1

# FIG. 5

10

WI1

110 } 100
120
310 } 300
320
220
400 } 200
210

A          A'

WI5

WI2

D3

D1

# FIG. 6

# FIG. 7

10

RG2

PW

RG1

210 ⎫
220 ⎬ 200

300
SPT3

PPT
SPT2

SPT2 ⎫
PPT ⎬ 120
SPT1

110 ⎫ 100

D3

D1

SPT1 ⎫
SPT2 ⎬ SPT
SPT3 ⎭

# FIG. 8

100

PPT    SPT2

RG2

RG1

PPT
SPT2

P3

PW
P2  ⎬ 120
P1

110

PPT   SPT1

D3

D1

# FIG. 9

100

a
b

PW

120

110

D3
D2
D1

# FIG. 10

100

d
c

P3
PW
P2
P1

120

110

D3
D2
D1

# FIG. 11

100

P5
PW-b
P4
P3
PW-a
P2
P1
120

110

D3
D1
D2

PW-a
PW-b
PW

# FIG. 12A

BD

AM

BD

PWA
RF

A1

A2

A1

D3

D1

D2

# FIG. 12B

CMM

PA3 PW PA2

BD

BD

PWA
RF

A1

A2

A1

D3

D1

D2

# FIG. 13

PA3 ⎫
PW  ⎬ CMM
PA2 ⎭

PA1

110

D3
D1
D2

# FIG. 14

PRU

PA3 ⎫
PW  ⎬ CMM
PA2 ⎭

PA1

110

D3
D1
D2

# FIG. 15

<u>100</u>

P3
PW } CMM
P2
120
P1
110

D3
D2
D1

# FIG. 16

# FIG. 17

1700

Preparing First Positive Electrode Slurry that Includes First Solid Electrolyte Particle ~ 1710

↓

Preparing Second Positive Electrode Slurry that Includes Second Solid Electrolyte Particle ~ 1720

↓

Coating on Positive Electrode Current Collector the First Positive Electrode Slurry to Form First Preliminary Active Material Layer ~ 1730

↓

Placing on First Preliminary Active Material Layer a Composite Layer that Includes Porous Film ~ 1740

↓

Pressing Positive Electrode Current Collector, First Preliminary Active Material Layer, and Composite Layer Stacked Together ~ 1750

Europäisches
Patentamt
European
Patent Office
Office européen
des brevets

# EUROPEAN SEARCH REPORT

**Application Number**

EP 25 19 5341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2024 0079953 A (SAMSUNG SDI CO LTD [KR]) 5 June 2024 (2024-06-05)<br>* paragraph [0005] - paragraph [0007] *<br>* paragraphs [0024] - [0025] *<br>* paragraph [0030] *<br>* paragraph [0136] - paragraph [0141] *<br>----- | 1-15 | INV.<br>H01M4/131<br>H01M4/36<br>H01M4/62<br>H01M10/0525<br>H01M10/0562 |
| A | EP 3 972 009 A1 (PANASONIC IP MAN CO LTD [JP]) 23 March 2022 (2022-03-23)<br>* paragraph [0076] - paragraph [0080] *<br>* paragraph [0087] *<br>* paragraph [0131] - paragraph [0137] *<br>----- | 1-15 | ADD.<br>H01M4/02 |
| A | US 2020/403267 A1 (LI ZHE [CN] ET AL) 24 December 2020 (2020-12-24)<br>* paragraph [0005] - paragraph [0006] *<br>* paragraph [0024] *<br>----- | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 7 January 2026 | Crottaz, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 5341

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2026

| Patent document cited in search report | Publication date | Patent family member(s) | | Publication date |
|---|---|---|---|---|
| KR 20240079953 A | 05-06-2024 | CN | 120283309 A | 08-07-2025 |
| | | EP | 4629311 A1 | 08-10-2025 |
| | | JP | 2025541728 A | 23-12-2025 |
| | | KR | 20240079953 A | 05-06-2024 |
| | | US | 2025385263 A1 | 18-12-2025 |
| | | WO | 2024117675 A1 | 06-06-2024 |
| EP 3972009 A1 | 23-03-2022 | CN | 114203950 A | 18-03-2022 |
| | | EP | 3972009 A1 | 23-03-2022 |
| | | JP | 7507401 B2 | 28-06-2024 |
| | | JP | 2022049868 A | 30-03-2022 |
| | | US | 2022085381 A1 | 17-03-2022 |
| US 2020403267 A1 | 24-12-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240110674